# EUROPEAN PATENT APPLICATION

(11) **EP 2 123 904 A1**
(43) Date of publication of application: **25.11.2009**
(21) Application number: 08156779.4
(22) Date of filing: 23.05.2008
(51) Int. Cl.: F03D 3/04

(54) **Apparatus for generating electric power using wind energy**

(71) Applicant: Chung, Chun-Neng, Neipu Township, Pingtung County (TW)
(72) Inventor: Chung, Chun-Neng, Neipu Township, Pingtung County (TW)
(74) Representative: Gille Hrabal Struck Neidlein Prop Roos

(57) **Abstract**

An apparatus (2) includes a blade unit (5) including having upright blades (52) connected fixedly to an upright rod (51) that has a lower end (512) disposed pivotally in a base (3) such that the blade unit (5) is rotatable relative to the base (3) to convert wind energy into a mechanical rotary power output, and coupled to a generator (6) in the base (3) to convert the mechanical rotary power output into electric power. Each blade (52) has opposite first and second side surfaces (521, 522). The first side surface (521) of each blade (52) faces the second side surface (522) of an adjacent blade (52). A wind-collecting unit (4) includes upright plates (41) fixed on the base (3), angularly equidistant and disposed around the blade unit (5). Any two adjacent plates (41) define an inwardly converging wind-guiding channel (43) therebetween. The plates (41) are shaped so that wind is guided by the plates to blow onto the first side surfaces (521) of the blades (52) via the wind-guiding channels (43).

## Description

The invention relates to an apparatus for generating electric power from wind energy.

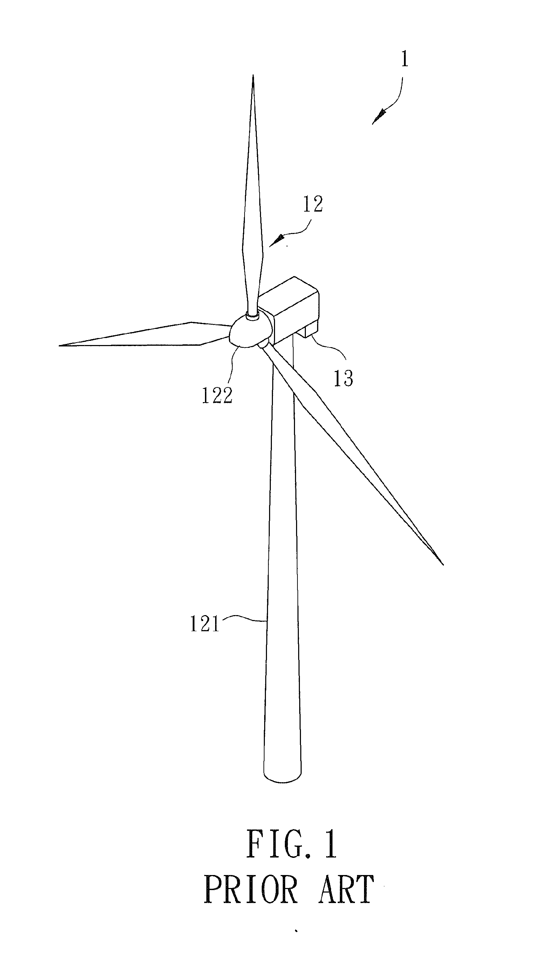

Referring to Figure 1, a conventional apparatus 1 for generating electric power from wind energy is shown to include a windmill 12 and a generator 13. The windmill 12 includes an upright prop 121 mounted fixedly on a supporting surface (not shown), and a wind impeller 122 having a plurality of blades. The windmill 12 converts wind energy into a mechanical rotary power output. The generator 13 is coupled to the windmill 12 to convert the mechanical rotary power into electric power.

The following are some of the drawbacks of the conventional apparatus 1:
1. A height of the prop 121 of the windmill 12 is about 70 meters, and a length of each blade of the wind impeller 122 of the windmill 12 is about 35 meters, thereby resulting in a relatively large space requirement. Therefore, the conventional apparatus 1 has to be located at a remote place far from a densely populated area, thereby resulting in inconvenience during implementation.
2. The arrangement of the conventional apparatus 1 cannot ensure stable electric generation for an area having wind from various directions.

Therefore, an object of the present invention is to provide an apparatus for generating electric power using wind energy that can overcome the aforesaid drawbacks of the prior art.

According to the present invention, there is provided an apparatus for generating electric power from wind energy. The apparatus comprises:
a base;
a blade unit including an upright rod extending vertically along a pivot axis and having a lower end disposed pivotally in the base, and an upper end, and at least one blade member having a plurality of upright blades connected fixedly to the upright rod such that the blade unit is rotatable relative to the base about the pivot axis so as to convert wind energy into a mechanical rotary power output, each of the blades having opposite first and second side surfaces, the first side surface of each of the blades facing the second side surface of an adjacent one of the blades;
a generator disposed in the base and coupled to the lower end of the upright rod of the blade unit to convert the mechanical rotary power output into electric power; and
a wind-collecting unit mounted fixedly on the base, and including a plurality of upright plates angularly equidistant and disposed around the blade unit, any two adjacent ones of the upright plates defining an inwardly converging wind-guiding channel therebetween.

The upright plates of the wind-collecting unit are shaped so that wind is guided by the upright plates of the wind-collecting unit to blow onto the first side surfaces of the blades of the blade member of the blade unit via the wind-guiding channels in the wind-collecting unit.

Other features and advantages of the present invention will become apparent in the following detailed description of the preferred embodiments with reference to the accompanying drawings, of which:
Figure 1 is a perspective view of a conventional apparatus for generating electric power using wind energy;
Figure 2 is a partly exploded perspective view showing the first preferred embodiment of an apparatus for generating electric power using wind energy according to the present invention;
Figure 3 is a schematic sectional view showing the first preferred embodiment;
Figure 4 is a schematic top view showing the first preferred embodiment without a top wall;
Figure 5 is a schematic top view showing the second preferred embodiment of an apparatus for generating electric power using wind energy according to the present invention without a top wall;
Figure 6 is a schematic top view showing the third preferred embodiment of an apparatus for generating electric power using wind energy according to the present invention without a top wall;
Figure 7 is a partly exploded perspective view showing the fourth preferred embodiment of an apparatus for generating electric power using wind energy according to the present invention;
Figure 8 is a partly exploded perspective view showing the fifth preferred embodiment of an apparatus for generating electric power using wind energy according to the present invention;
Figure 9 is a schematic top view showing the fifth preferred embodiment without a top wall;
Figure 10 is a fragmentary perspective view showing a modified example of an upright plate of a wind-collecting unit of the first preferred embodiment; and
Figure 11 is a fragmentary perspective view showing another modified example of the upright plate of the wind-collecting unit of the first preferred embodiment.

Before the present invention is described in greater detail, it should be noted that like elements are denoted by the same reference numerals throughout the disclosure.

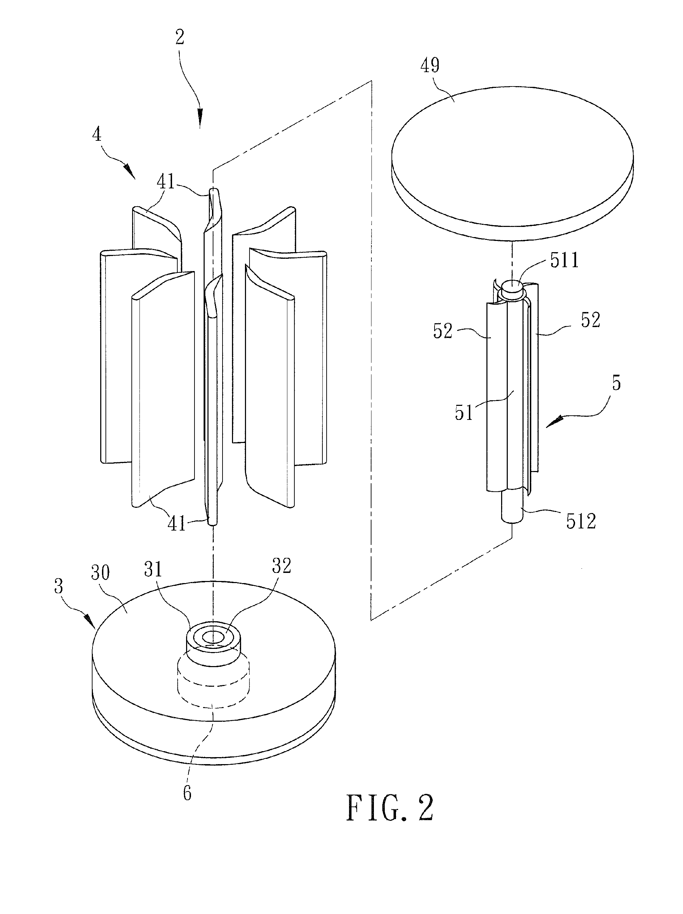

Referring to Figures 2 to 4, the first preferred embodiment of an apparatus 2 for generating electric power using wind energy according to the present invention is shown to include a base 3, a blade unit 5, a generator 6, and a wind-collecting unit 4.

In this embodiment, the base 3 includes a base body 30, a mounting tube 31 extending upwardly from a top side of the base body 30, and a bearing 32 disposed in the mounting tube 31.

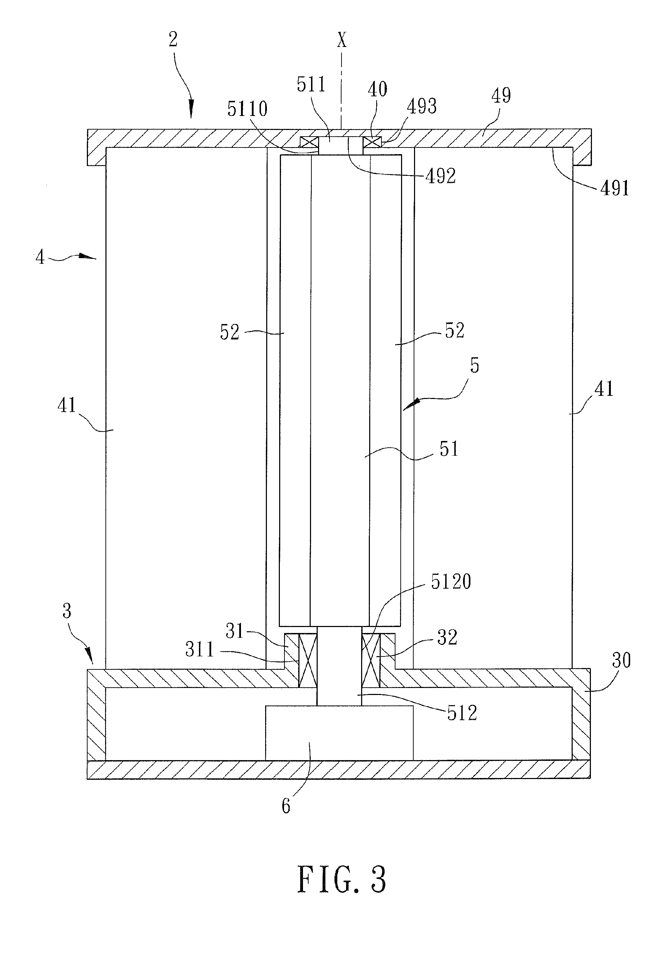

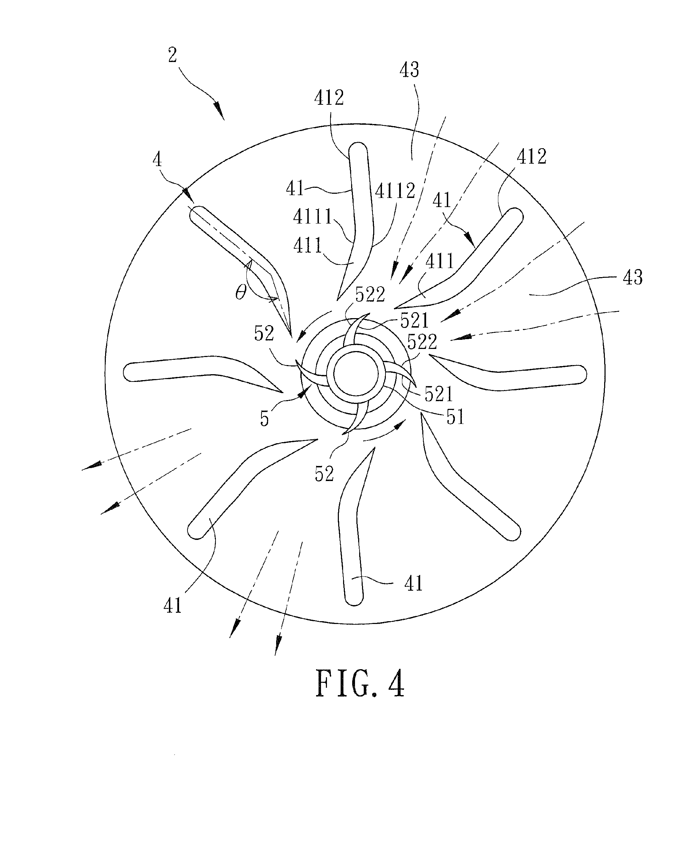

The blade unit 5 includes an upright rod 51 extending vertically along a pivot axis (X) and having a lower end 512 disposed pivotally in the base 3 and extending through the mounting tube 31 and into the base body 30, and a blade member, which has a plurality of upright blades 52 connected fixedly to the upright rod 51, such that the blade unit 5 is rotatable relative to the base 3 about the pivot axis (X) so as to convert wind energy into a mechanical rotary power output. The bearing 32 is disposed between an outer annular surface 5120 of the lower end 512 of the upright rod 51 and an inner annular surface 311 of the mounting tube 31 of the base 3, as shown in Figure 3. Each blade 52 has opposite first and second side surfaces 521, 522, and the first side surface 521 of each blade 52 faces the second side surface 522 of an adjacent blade 52, as shown in Figure 4.

The generator 6 is disposed in the base body 30 of the base 3, and is coupled to the lower end 512 of the upright rod 51 of the blade unit 5 to convert the mechanical rotary power output into electric power.

The wind-collecting unit 4 is mounted fixedly on the base 3, and includes a plurality of upright plates 41 angularly equidistant and disposed around the blade unit 5, a top wall 49, and a bearing 40. Any two adjacent ones of the upright plates 41 define an inwardly converging wind-guiding channel 43 therebetween. The upright plates 41 are shaped so that wind is guided by the upright plates 41 to blow onto the first side surfaces 521 of the blades 52 of the blade member of the blade unit 5 via the wind-guiding channels 43. As shown in Figure 4, each upright plate 41 has a first end portion 411 adjacent to the blade unit 5 and extending in a non-radial direction, and a second end portion 412 opposite to the first end portion 411, and is bent so that an obtuse angle (θ) is formed between the first and second end portions 411, 412. The obtuse angle (θ) ranges from 135° to 165°. The first end portion 411 of each upright plate 41 has a thickness that decreases gradually toward the blade unit 5. In this embodiment, the first end portion 411 of each upright plate 41 has a flat first surface 4111, and a curved second surface 4112 opposite to the flat first surface 4111. The top wall 49 is mounted on top ends of the upright plates 41, and has a bottom surface 491 formed with a positioning groove 492 that permits extension of the upper end 511 of the upright rod 51 of the blade unit 5 thereinto and that is defined by an inner annular surface 493 of the top wall 49. The bearing 40 is disposed between the inner annular surface 493 of the top wall 49 and an outer annular surface 5110 of the upper end 511 of the upright rod 51 of the blade unit 5.

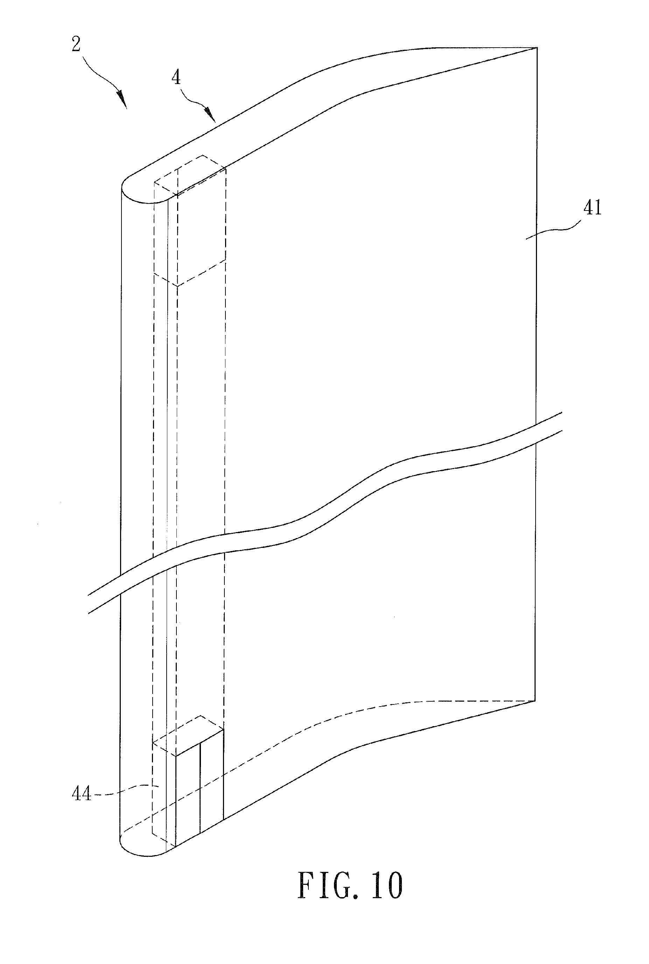

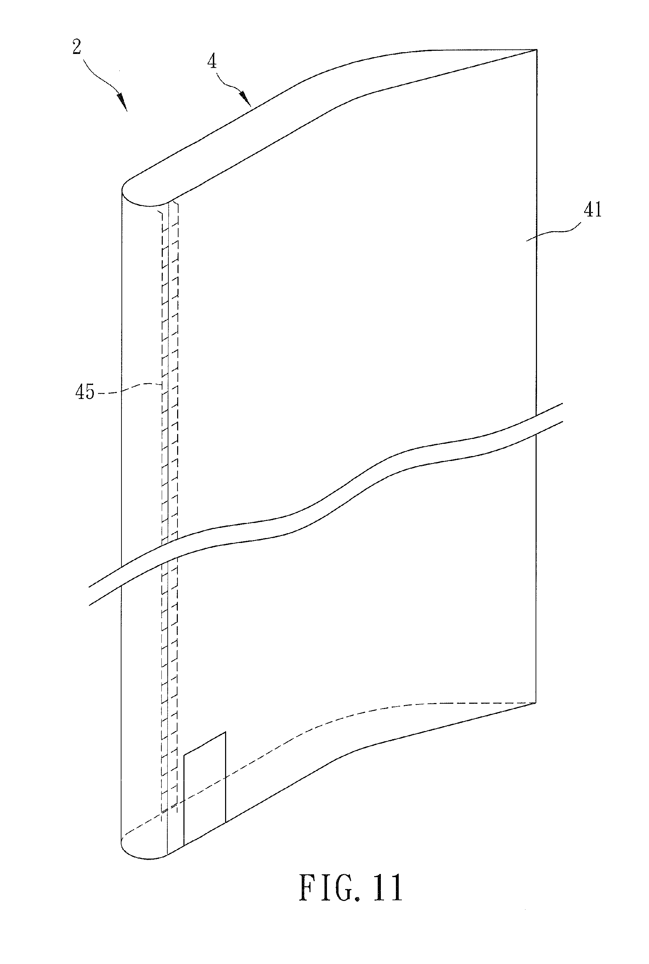

In other embodiments, an elevator 44 is disposed movably in one of the upright plates 41 of the wind-collecting unit 4, as shown in Figure 10. Alternatively, one of the upright plates 41 of the wind-collecting unit 4 further has a plurality of stairs 45 therein, as shown in Figure 11.

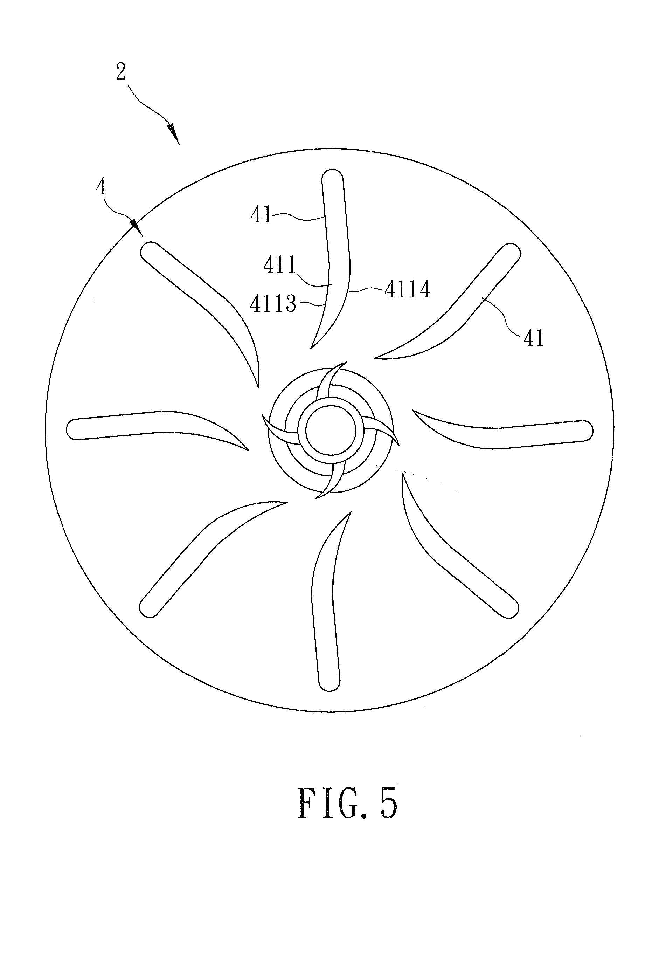

Figure 5 illustrates the second preferred embodiment of an apparatus 2 for generating electric power using wind energy according to this invention, which is a modificationofthefirstpreferredembodiment. Unlike the previous embodiment, the first end portion 412 of each upright plate 41 of the wind-collecting unit 4 has opposite curved first and second surfaces 4113, 4114.

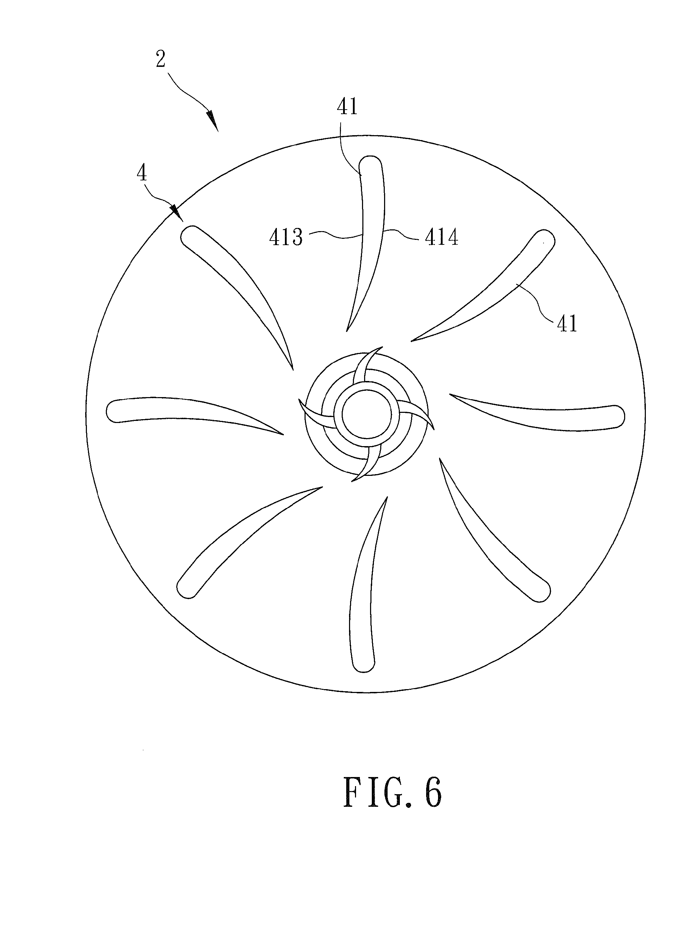

Figure 6 illustrates the third preferred embodiment of an apparatus 2 for generating electric power using wind energy according to this invention, which is a modificationofthefirstpreferredembodiment. Unlike the previous embodiments, each upright plate 41 of the wind-collecting unit 4 has opposite curved lateral surfaces 413, 414.

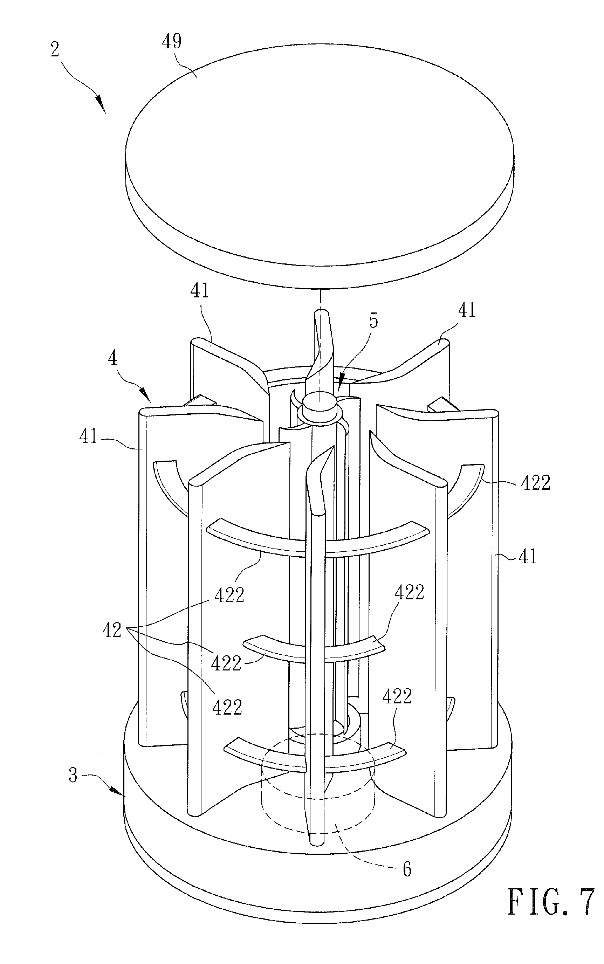

Figure 7 illustrates the fourth preferred embodiment of an apparatus 2 for generating electric power using wind energy according to this invention, which is a modificationofthefirstpreferredembodiment. Inthis embodiment, the wind-collecting unit 4 further includes a plurality of connecting members 42 each interconnecting two corresponding adjacent ones of the upright plates 41. Each connecting member 42 includes a plurality of connecting plates 422.

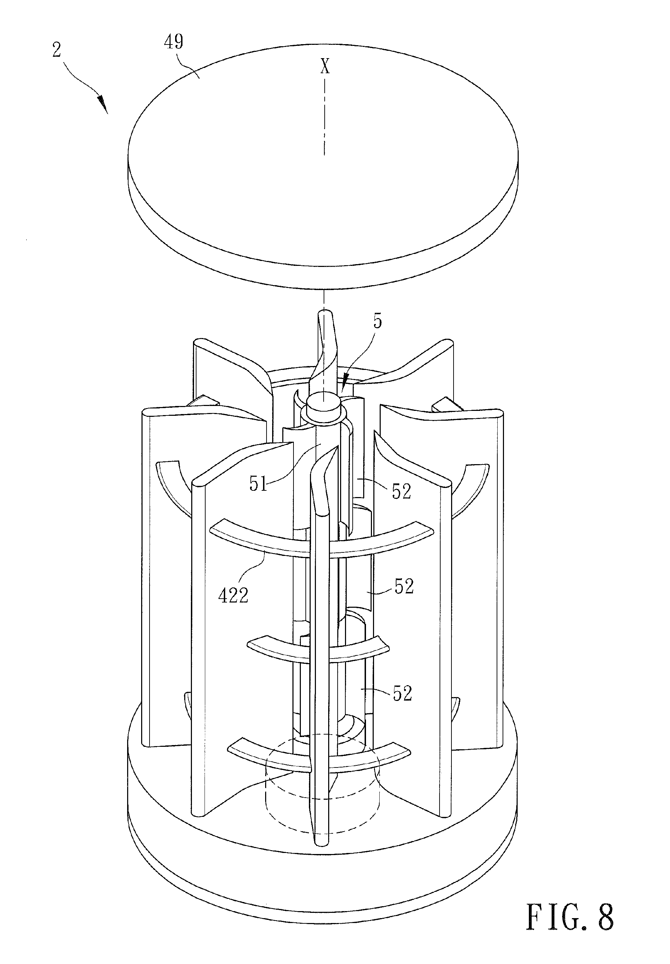

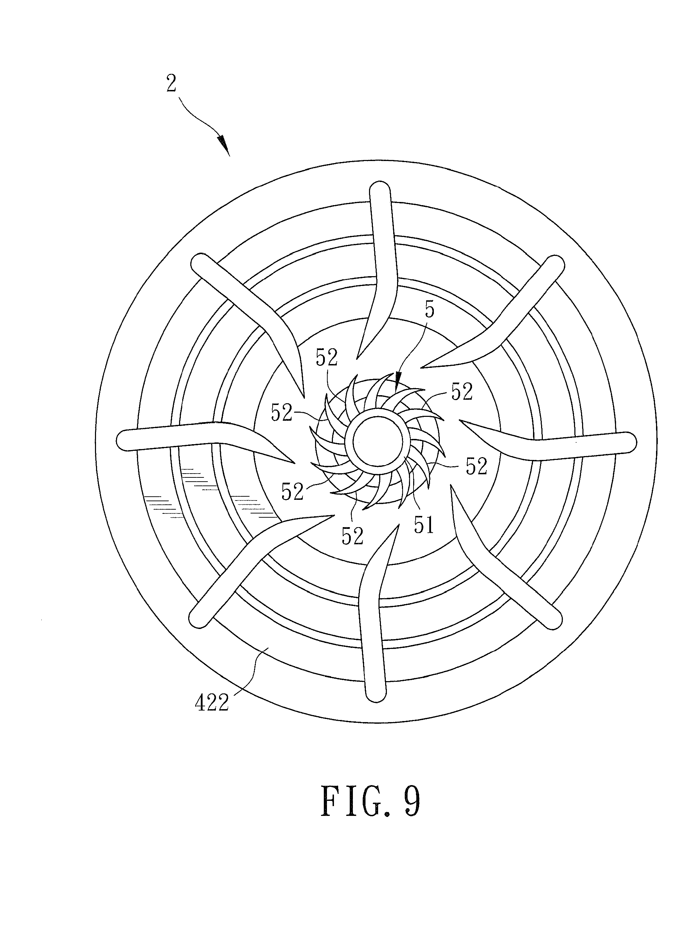

Figures 8 and 9 illustrate the fifth preferred embodiment of an apparatus for generating electric power using wind energy according to this invention, which is a modification of the fourth preferred embodiment. In this embodiment, the blade unit 5 includes a plurality of the blade members aligned in the pivot axis (X). The upright blades 52 of each blade member are angularly equidistant. The upright blades 52 of the blade members differ angularly from each other (see Figure 9).

In sum, due to the presence of the wind-collecting unit 4, wind from different directions can be guided by the upright plates 41 to blow onto the first side surfaces 521 of the blades 52 of the blade unit 5 via the wind-guiding channels 43. Therefore, the apparatus 2 of the present invention can ensure stable electric generation even though the wind direction changes.

## Claims

1. An apparatus (2) for generating electric power from wind energy, **characterized by**:
a base (3);
a blade unit (5) including an upright rod (51) extending vertically along a pivot axis (X) and having a lower end (512) disposed pivotally in said base (3), and an upper end (511), and at least one blade member having a plurality of upright blades (52) connected fixedly to the upright rod (51) such that said blade unit (5) is rotatable relative to said base (3) about the pivot axis (X) so as to convert wind energy into a mechanical rotary power output, each of said blades (52) having opposite first and second side surfaces (521, 522), said first side surface (521) of each of said blades (52) facing said second side surface (522) of an adjacent one of said blades (52);
a generator (6) disposed in said base (3) and coupled to said lower end (512) of said upright rod (51) of said blade unit (5) to convert the mechanical rotary power output into electric power; and
a wind-collecting unit (4) mounted fixedly on said base (3), and including a plurality of upright plates (41) angularly equidistant and disposed around said blade unit (5), any two adjacent ones of said upright plates (41) defining an inwardly converging wind-guiding channel (43) therebetween;
wherein said upright plates (41) of said wind-collecting unit (4) are shaped so that wind is guided by said upright plates (41) of said wind-collecting unit (4) to blow onto said first side surfaces (521) of said blades (52) of said blade member of said blade unit (5) via said wind-guiding channels (43) in said wind-collecting unit (4).

2. The apparatus (2) as claimed in Claim 1, **characterized in that** said base (3) includes a base body (30), amounting tube (31) extending upwardly from a top side of said base body (30) for permitting extension of said lower end (512) of said upright rod (51) of said blade unit (5) into said base (3) through said mounting tube (31), and a bearing (32) disposed between an outer annular surface (5120) of said lower end (512) of said upright rod (51) of said blade unit (5) and an inner annular surface (311) of said mounting tube (31) of said base (3).

3. The apparatus (2) as claimed in Claim 1, **characterized in that** each of said upright plates (41) of said wind-collecting unit (4) has a first end portion (411) adjacent to said blade unit (5) and extending in a non-radial direction, and a second end portion (412) opposite to said first end portion (411), and is bent so that an obtuse angle (θ) is formed between said first and second end portions (411, 412).

4. The apparatus (2) as claimed in Claim 3, further **characterized in that** the obtuse angle (θ) ranges from 135° to 165°.

5. The apparatus (2) as claimed in Claim 3, further **characterized in that** said first end portion (411) of each of said upright plates (41) of said wind-collecting unit (4) has a thickness that decreases gradually toward said blade unit (5).

6. The apparatus (2) as claimed in Claim 3, further **characterized in that** said first end portion (411) of each of said upright plates (41) of said wind-collecting unit (4) has a flat first surface (4111), and a curved secondsurface (4112) oppositeto said flat first surface (4111).

7. The apparatus (2) as claimed in Claim 3, further **characterized in that** said first end portion (411) of each of said upright plates (41) of said wind-collecting unit (4) has opposite curved first and second surfaces (4113, 4114).

8. The apparatus (2) as claimed in Claim 3, further **characterized in that** each of said upright plates (41) of said wind-collecting unit (4) has opposite curved lateral surfaces (413, 414).

9. The apparatus (2) as claimed in Claim 1, **characterized in that** said wind-collecting unit (4) further includes a top wall (49) mounted on top ends of said upright plates (41) and having a bottom surface (491) formed with a positioning groove (492) that permits extension of said upper end (511) of said upright rod (51) of said blade unit (5) thereinto and that is defined by an inner annular surface (493) of said top wall (49), and a bearing (40) disposed between said inner annular surface (493) of said top wall (49) and an outer annular surface (5110) of said upper end (511) of said upright rod (51) of said blade unit (5).

10. The apparatus (2) as claimed in Claim 1, **characterized in that** said wind-collecting unit (4) further includes a plurality of connecting members (42) each interconnecting two corresponding adjacent ones of said upright plates (41).

11. The apparatus (2) as claimed in Claim 10, further **characterized** that each of said connecting members (42) includes a plurality of connecting plates (422).

12. The apparatus (2) as claimed in Claim 1, **characterized in that** said blade unit (5) includes a plurality of said blade members aligned in the pivot axis (X), said upright blades (52) of each of said blade members being angularly equidistant, said upright blades (52) of said blade members differing angularly from each other.

13. The apparatus (2) as claimed in Claim 1, further **characterized by** at least one elevator (44) disposed movably in one of said upright plates (41) of said wind-collecting unit (4).

14. The apparatus (2) as claimed in Claim 1, **characterized in that** at least one of said upright plates (41) of said wind-collecting unit (4) further has a plurality of stairs (45) therein.
